Europäisches Patentamt

European Patent Office

Office européen des brevets

(19)

(11) Veröffentlichungsnummer : **0 093 370**
**B1**

(12) **EUROPÄISCHE PATENTSCHRIFT**

(45) Veröffentlichungstag der Patentschrift :
05.03.86

(21) Anmeldenummer : **83104031.6**

(22) Anmeldetag : **25.04.83**

(51) Int. Cl.⁴ : **C 09 J 7/02, B 32 B 27/32**

(54) Klebeband.

(30) Priorität : **04.05.82 DE 3216603**

(43) Veröffentlichungstag der Anmeldung :
**09.11.83 Patentblatt 83/45**

(45) Bekanntmachung des Hinweises auf die Patenterteilung : **05.03.86 Patentblatt 86/10**

(84) Benannte Vertragsstaaten :
**AT DE FR GB IT NL SE**

(56) Entgegenhaltungen :
**DE-A- 2 830 536**
**FR-A- 1 435 221**

(73) Patentinhaber : **HOECHST AKTIENGESELLSCHAFT**
**Postfach 80 03 20**
**D-6230 Frankfurt am Main 80 (DE)**

(72) Erfinder : **Hammerschmidt, Peter**
**Münzenbergstrasse 20**
**D-6200 Wiesbaden (DE)**
Erfinder : **Crass, Günther**
**Bachstrasse 7**
**D-6204 Taunusstein 4 (DE)**

## Beschreibung

Die vorliegende Erfindung betrifft ein mehrschichtiges Klebeband auf Basis von biaxial orientierter Polyolefinfolie, welches beim Entfernen von einer Unterlage zerstört wird.

Ein- oder beidseitig beschichtete Klebebänder sind seit langer Zeit bekannt. Die ersten Bänder besaßen eine Trägerschicht aus Cellulosehydrat. Diese Bänder sind jedoch sehr empfindlich gegenüber Feuchtigkeitsschwankungen. Bei niedrigeren Feuchtigkeitswerten werden die Bänder spröde und reißen zu leicht, während bei höheren Feuchtigkeitswerten die Rollen teleskopieren und das Klebeband schwer abzureißen ist. Außerdem greifen die relativ aggressiven Kleber die Trägerfolie an.

Aufgrund dieser Nachteile hat man in der Folgezeit versucht, die Cellulosehydratträgerfolie durch Polymerfolien zu ersetzen. Es stellte sich dabei heraus, daß z. B. Klebebänder mit einer Trägerfolie aus Polyethylenterephthalat zu schwer abzureißen waren, während Bänder auf der Basis von Celluloseacetat zu leicht reißen. Bänder auf der Basis von orientiertem Polystyrol sind zu spröde und haben außerdem eine geringe Lösungsmittelbeständigkeit. Bänder mit Trägerfolien aus Polyethylen, Vinylidenchloridcopolymeren oder weichgemachtem Polyvinylchlorid besitzen geringe mechanische Festigkeit und sind weiterhin schwer abzureißen.

Diese Tatbestände sind sehr anschaulich in der US-PS-3 089 786 geschildert, die es sich zum Ziel gesetzt hat, ein Klebeband auf der Basis von Polyvinylchlorid zu schaffen, das die Nachteile der bis dahin bekannten Bänder nicht aufweist. Es ist jedoch auch weiterhin bekannt; daß die auf Basis von Polyvinylchlorid hergestellten Bänder leicht zum Aufsplittern bei stoßartiger Querbelastung und zum Ausreißen in Längsrichtung neigen. Man hat deshalb versucht, die Polyvinylchlorid-Trägerfolien durch andere Polymerträgerfolien zu ersetzen, zumal man den Bändern auf Polyvinylchlorid-Basis Umweltprobleme bei deren Vernichtung durch Verbrennen anlasten könnte.

Es sind aber auch schon klebende Kunststoffolienbahnen auf Polyolefinbasis bekannt, so z. B. aus der DE-OS-29 38 471.

Die meisten Schriften, die derartige selbstklebende Materialien, Klebestreifen oder Klebebänder beschreiben, befassen sich entweder mit Methoden, welche die Hafteigenschaften verbessern, z. B. die DE-OS-28 30 613, welche zugleich auch das besondere dekorative Aussehen der dort beschriebenen Produkte anspricht, oder aber mit verbesserten Trenneigenschaften der Klebeschichten von daran befestigten Schutzschichten, wie z. B. die DE-OS-29 45 154 ; auch die Verringerung der Gefahr einer Beschädigung von Oberflächen durch Klebebänder sowie ein diesem Zweck dienendes doppelseitig selbstklebendes Band wird in der DE-OS-29 11 459 beschrieben.

Es sind aber auch Verwendungszwecke denkbar, bei denen ein Klebeband benötigt wird, welches so gute Hafteigenschaften besitzt, daß es sich entweder gar nicht mehr von der Unterlage entfernen läßt, auf die es einmal aufgebracht ist, oder aber bei gewaltsamer oder unbefugter Entfernung zerstört wird und somit entweder durch Beschädigung der Unterlage oder durch dort verbleibende Fragmente Hinweise auf seine Entfernung liefert, welches sich aber auf keinen Fall nach der Entfernung wiederverwenden läßt.

Beispiele dafür, wo derartige Sicherheitsklebestreifen benötigt werden, sind Preisetiketten in Selbstbedienungsläden oder amtliche Stempel auf Autokennzeichen, Eichmarken auf Uhren und Zählwerken, Siegelmarken etc.

Für solche Zwecke werden derzeit Papieraufkleber verwendet, welche mechanisch geprägt oder vorgestanzt sind, mithin Sollbruchstellen enthalten, und somit bei unbefugter Entfernung nur der jeweiligen Prägung entsprechende kleine Bruchstücke ergeben. Diese Aufkleber haben den Nachteil, daß sie vor ihrer Verwendung immer einem zusätzlichen Arbeitsgang unterworfen werden müssen, nämlich der Prägung, und sie lassen sich, bedingt durch die in ihnen enthaltenen Sollbruchstellen, nur schwer als ganzes von beispielsweise einer Vorratsrolle abziehen.

Der vorliegenden Erfindung liegt somit die Aufgabe zugrunde, ein Sicherheitsklebeband zu schaffen, welches bei unbefugter Entfernung von einer Unterlage, auf welche es aufgeklebt ist, zerstört wird und welches nicht vorher zu diesem Zweck einem Präge- oder Stanzarbeitsgang unterworfen werden muß, welches sich aber leicht von einer Vorratsrolle abziehen oder von einer Schutzschicht entfernen läßt.

Gelöst wird diese Aufgabe durch ein mehrschichtiges Sicherheitsklebeband, dessen Eigenschaften und dessen Zusammensetzung in den Ansprüchen 1 bis 6 beschrieben sind und dessen Herstellungsverfahren die Ansprüche 7 und 8 wiedergeben.

Das Kernstück des erfindungsgemäßen Klebebandes ist eine Innenschicht 1 aus einem Polymeren oder Copolymeren der in den Ansprüchen 1 und 2 genannten Art, in welchem sich die fein verteilten, festen, insbesondere anorganischen Partikel einer Größe von 0,2 bis 20 $\mu$m, vorzugsweise von 2 bis 8 $\mu$m, und einer Menge von 3 bis 20 Gew.-%, vorzugsweise 5 bis 15 Gew.-%, bezogen auf das Gesamtgewicht des die Schicht bildenden Polymeren befinden. Die Partikel bestehen aus dem üblicherweise verwendeten, vorzugsweise anorganischen Material wie Titandioxyd, Calciumcarbonat, oder Siliciumdioxid. Im Prinzip sind aber auch opake organische Partikel, z. B. aus vernetztem Kunststoff, geeignet, deren Schmelzpunkt oberhalb der während des Verarbeitungsprozesses auftretenden Temperaturen liegt.

Die Deckschichten 2, 3, die zusammen mit der Innenschicht in einem Coextrusionsprozeß hergestellt werden, bestehen erfindungsgemäß aus einem Polymerisat eines α-Olefins, bevorzugt aus Homo- oder Copolymeren des Propylens mit bis zu 10 Gew.-% Ethylenanteil, in welchem gegebenenfalls noch ein Zusatz bis höchstens 1 Gew.-%, bezogen auf das Gewicht des die Deckschicht bildenden Polymeren, an Pigment zur Verbesserung der Schlupfeigenschaften enthalten sein kann. Derartige Pigmente sind Verbindungen auf Basis von Kieselsäure, z. B. die unter der Bezeichnung Zeolithe bekannten Natrium-Aluminium-Silikate.

Die Deckschichten können aus unterschiedlichen Materialien sein und von unterschiedlicher Stärke, sie sind aber bevorzugt aus dem gleichen Material und von gleicher Stärke, weil dies die Herstellung in technischer Hinsicht vereinfacht.

Die Zerstörung beim Abreissen des erfindungsgemäßen Klebebandes geschieht durch Delaminierung. Durch die Anwesenheit der anorganischen Teilchen in der Innenschicht 1 des Klebebandes und durch die bis zu 20 °C niedrigeren Strecktemperaturen entstehen im Inneren der Innenschicht im Grenzbereich zwischen dem anorganischen Medium und der Polymermasse Mikrorisse und winzig kleine Poren, sogenannten Vakuolen. Dies führt dazu, daß die Innenschicht in einer Art « Lochstruktur » vorliegt : jedenfalls besitzt sie eine gewisse Porosität relativ zu den Deckschichten, welche aus einem Polymerisat eines α-Olefins bestehen. Erfindungsgemäß liegt somit eine Mehrschichtfolie mit relativ glatten Oberflächen und einem Vakuolen enthaltenden Kern vor.

Bringt man nun auf eine Seite der so beschaffenen Folie einen Kleber mit großer Haftkraft auf, dessen Adhäsionskräfte z. B. an Papier größer sind, als die Kräfte, die nötig sind um die mit Vakuolen durchsetzte Innenschicht zu zerreißen, und bringt man dieses Klebeband mit einer Papierunterlage in Kontakt, so delaminiert das Klebeband beim Entfernen von dieser Unterlage in der Folienebene.

Die Haftkraft des Klebers wird nach den für den Fachmann geläufigen Normen bestimmt (z. B. AFERA-Norm TL 7510-011), und zwar durch Bestimmung des Abrollwiderstandes. Geeignete Kleber, welche für das erfindungsgemäße Klebeband verwendet werden können, sind Kleber auf Kautschuk- oder Acrylatbasis.

Um aber noch zu gewährleisten, daß das so beschichtete erfindungsgemäße Klebeband noch einwandfrei von der Vorratsrolle, auf welche es normalerweise aufgewickelt ist, abzuziehen ist und nicht bei diesem Vorgang bereits durch Delaminierung zerstört und damit unbrauchbar wird, muß die Gegenseite der mit Klebstoff beschichteten Oberfläche mit einem klebstoffabweisenden Überzug versehen sein, einem sogenannten Release-Coat. Derartige Überzüge sind aus der Literatur bekannt. Es können dafür verwendet werden höhere Fettsäureester sowie Wachse wie z. B. Montanwachs, ein Gemisch von Estern der Montansäure mit verschiedenen Wachsalkoholen ; außerdem eignen sich auch Mischungen von Polyurethanen mit Polyvinylalkohol dafür.

Die Figuren sollen die Erfindung weiter veranschaulichen.

Figur 1 zeigt einen Querschnitt durch ein erfindungsgemäßes Klebeband mit Deckschichten von gleichem Aufbau.

Figur 2 zeigt einen Querschnitt durch ein erfindungsgemäßes Klebeband mit Deckschichten von unterschiedlichem Aufbau.

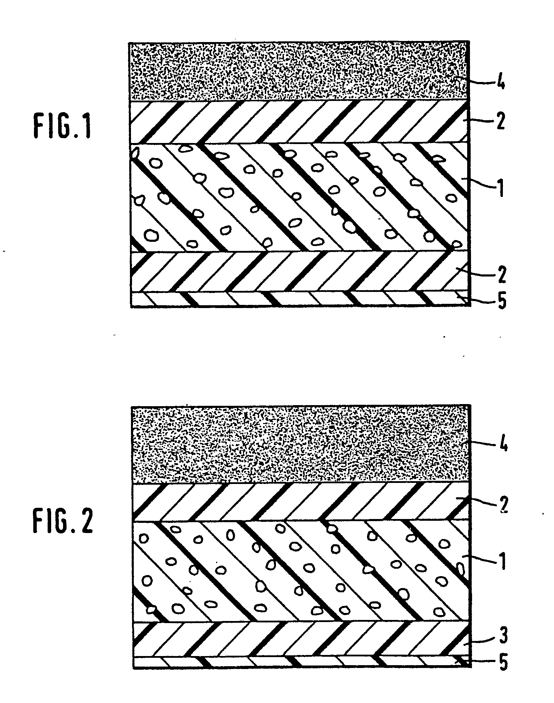

Im einzelnen ist in Figur 1 zu sehen die Innenschicht 1 mit den Vakuolen, zwei Deckschichten 2, beide aus Polypropylen gleicher Zusammensetzung, die Kleberschicht 4 und die mit Release-Coat bezeichnete klebstoffabweisende Schutzschicht 5.

Figur 2 zeigt ebenfalls eine Innenschicht 1 mit Vakuolen, eine Deckschicht 2 aus Polypropylen, eine zweite Deckschicht 3 aus Polypropylen-Copolymerisat mit einem Pigmentzusatz, die Klebstoffschicht 4 und einen Release-Coat 5.

Beispiele

1. Eine biaxial gestreckte 35 μm dicke Polypropylenfolie aus einem Polypropylen-Homopolymerisat und eine siegelfähige Dreischichtfolie bestehend aus einer Basisschicht aus einem Polypropylen-Homopolymerisat und Deckschichten aus einem C$_2$C$_3$-Copolymerisat (ebenfalls 35 μm) wurden unter üblichen Bedingungen vorderseitig mit einem Kautschukkleber und rückseitig mit einem Release-Coat aus Montanwachs beschichtet. Die aus dieser beschichten Folie hergestellten Klebestreifen ließen sich in bekannter Weise als Klebeband z. B. bei der Kartonverpackung einsetzen. Das Klebeband konnte anschließend ohne Zerstörung bzw. Abriß der Folie wieder von dem Karton entfernt werden.

2. Es wurde eine erfindungsgemäße Folie mit einer Gesamtdicke von ebenfalls 35 μm, die im vorliegenden Fall aus einer Innenschicht von 25 bis 30 μm Dicke, bestehend aus einem mit 10 feingemahlenem Calciumcarbonat modifizierten Polypropylen-Homopolymerisat sowie aus beidseitig gleichartigen Deckschichten aus unmodifiziertem Polypropylen mit Schichtdicken von jeweils 3 bis 5 μm zusammengesetzt war und welche bei im Vergleich zur üblichen Folienstrecktechnologie für Polypropylen um 10 bis 15 °C tieferen Strecktemperaturen verstreckt wurde, einseitig mit einem Acrylatkleber, der der Folie einen Abrollwiderstand nach AFERA-Norm TL 7510-011 von mehr als 8 N/25 mm Streifenbreite verleiht und rückseitig mit dem oben erwähnten Release-Coat beschichtet und geschnitten. Das erfindungsgemäße Klebeband ließ sich problemlos von der Klebebandrolle abrollen und zur Verklebung von Kartons und anderen Behältnissen einsetzen, wurde jedoch stets beim Entfernen (Abreissen) von der Unterlage durch Delaminierung völlig zerstört.

Patentansprüche

1. Mehrschichtiges delaminierbares Sicherheitsklebeband auf Basis von biaxial ori-

entierter Polyolefinfolie, welches auf einer Seite die Klebstoffschicht und auf der anderen einen Release-Coat besitzt, dadurch gekennzeichnet, daß es aus einer Innenschicht (1) aus einem Polymeren oder Copolymeren eines α-Olefins mit 2 bis 6 C-Atomen besteht, in welcher in fein verteilter Form feste, insbesondere anorganische Teilchen einer Größe von 0,2 bis 20 μm in einer Menge von 3 bis 20 Gewichtsprozent, vorzugsweise von 5 bis 15 Gewichtsprozent, bezogen auf das Gesamtgewicht des die Schicht bildenden Polymeren, vorliegen, daß im Innern der Innenschicht im Grenzbereich zwischen dem anorganischen Medium und der Polymermasse Mikrorisse und winzig kleine Poren, sogenannte Vakuolen, vorliegen und daß die Innenschicht auf beiden Seiten Deckschichten (2, 3) aus Polymeren oder Copolymeren von α-Olefinen mit 2 bis 4 C-Atomen trägt, von denen die eine auf der von der Innenschicht abgewandten Seite mit einer Klebstoffschicht (4) beschichtet ist und die andere ebenfalls auf ihrer der Innenschicht abgewandten Seite eine klebstoffabweisende Schicht (5) trägt.

2. Band nach Anspruch 1, dadurch gekennzeichnet, daß die Innenschicht aus einem Polymeren oder Copolymeren eines α-Olefins mit 2 bis 4 C-Atomen, vorzugsweise aus einem Co- oder Homopolymeren des Propylens, insbesondere aus einem Propylen-Homopolymerisat mit einem isotaktischen Anteil von mindestens 90 % aufgebaut ist.

3. Band nach einem der Ansprüche 1 oder 2, dadurch gekennzeichnet, daß die Deckschichten (2, 3) gleichen Aufbau besitzen und aus Homo- oder Copolymeren des Propylens mit Ethylen bestehen, welches gegebenenfalls einen Zusatz von 0,1 bis 1 Gew.- %, bezogen auf das Gesamtgewicht des die Schicht bildenden Polymeren an Pigment zur Verbesserung der Schlupfeigenschaften enthält.

4. Band nach einem der Ansprüche 1 bis 3, dadurch gekennzeichnet, daß die Klebstoffschicht (4) aus Kautschuk- oder Acrylatkleber besteht, und das Band einen Abrollwiderstand von mehr als 5 N/25 mm Streifenbreite besitzt.

5. Band nach einem der Ansprüche 1 bis 4, dadurch gekennzeichnet, daß die klebstoffabweisende Schicht (5) aus einer Mischung von Polyurethan mit Polyvinylalkohol oder aus höheren Fettsäureestern besteht.

6. Band nach einem der Ansprüche 1 bis 5, dadurch gekennzeichnet, daß es eine Gesamtdicke von 15 bis 60 μm, insbesondere von 20 bis 50 μm, aufweist.

7. Verfahren zur Herstellung eines mehrschichtigen Sicherheitsklebebandes nach einem der Ansprüche 1 bis 6, bei dem die Schmelze des die Innenschicht (1) bildenden Polymeren zusammen mit den darin feinverteilten Partikeln einerseits und die Schmelzen der die Deckschichten (2, 3) bildenden Polymeren andererseits gemeinsam und gleichzeitig durch eine Flachdüse extrudiert werden, die erhaltene Flachfolie zur Verfestigung abgekühlt, durch Strecken in Längs-. und Querrichtung orientiert und thermofixiert wird und danach die klebstoffabweisende Schicht (5) und die Klebstoffschicht (4) nach bekannten Verfahren aufgebracht werden, dadurch gekennzeichnet, daß die Temperatur während der Längsstreckung bis zu 20 °C unterhalb der Temperatur liegt, bei welcher üblicherweise eine klare Folie aus dem gleichen Material, aus dem die Innenschicht (1) besteht, in Längsrichtung gestreckt wird.

8. Verfahren nach Anspruch 7, dadurch gekennzeichnet, daß die Temperatur während der Längsstreckung im Bereich von 120 bis 130 °C liegt.

## Claims

1. Multilayer delaminatable adhesive security tape based on a biaxially oriented polyolefin film, which is provided with the adhesive coating on one surface and a release coat on the other surface thereof, wherein an inner layer (1) comprising a polymer or copolymer of an α-olefin having from 2 to 6 carbon atoms contains solid, particularly inorganic, particles of a dimension of 0.2 to 20 μm, in a finely divided form, in a quantity of 3 to 20 percent by weight, preferably of 5 to 15 percent by weight, relative to the total weight of the polymer forming the layer, wherein microcrades and minute pores, socalled vacuoles, are present in the interior of the inner layer in the boundary area between the inorganic medium and the polymer mass and wherein the inner layer carries cover layers (2, 3) on either side, which comprise polymers or copolymers of α-olefins having from 2 to 4 carbon atoms, one of these cover layers being coated with an adhesive layer (4) on its surface facing away from the inner layer and the other carrying an inkrepellent layer (5) again on its surface facing away from the inner layer.

2. A tape as claimed in claim 1, wherein the inner layer comprises a polymer or copolymer of an α-olefin having from 2 to 4 carbon atoms, preferably a copolymer or homopolymer of propylene, in particular of a propylene homopolymer having an isotactic component of at least 90 %.

3. A tape as claimed in any of claims 1 or 2, wherein the cover layers (2, 3) have the same constitution and comprise a homopolymer or copolymer of propylene with ethylene, which optionally contains an addition of 0.1 to 1 percent by weight, relative to the total weight of the polymer forming the layer, of a pigment suitable for improving the slip properties.

4. A tape as claimed in any of claims 1 to 3, wherein the adhesive layer (4) comprises a rubber or acrylate adhesive and the tape has a resistance to unwinding of more than 5 N/25 mm of strip width.

5. A tape as claimed in any of claims 1 to 4, wherein the adhesive-repellent layer (5) is comprised of a mixture of polyurethane with polyvinyl alcohol, or of higher fatty acid esters.

6. A tape as claimed in any of claims 1 to 5, which has a total thickness of 15 to 60 μm, particularly of 20 to 50 μm.

7. Process for the production of a multilayer adhesive security tape as claimed in any of claims 1 to 6, comprising extruding the polymer melt forming the inner layer (1) with the particles finely divided therein, on the one hand, and the polymer melts forming the cover layers (2, 3), on the other hand, together and simultaneously through a flat sheet die, cooling the flat sheet obtained to effect solidification, orienting the sheet by stretching it in the longitudinal and transverse directions and heat-setting it, and thereafter applying the ink-repellent layer (5) and the adhesive layer (4) according to customary methods, wherein the temperature during longitudinal stretching is up to 20 °C below the temperature, which is normally used for stretching a clear film comprising the same material as the inner layer (1) in the longitudinal direction.

8. A process as claimed in claim 7, wherein the temperature during longitudinal stretching is in the range from 120 to 130 °C.

## Revendications

1. Bande adhésive de sécurité en plusieurs couches, délaminable, à base d'une feuille de polyoléfine orientée biaxialement dont l'une des faces est recouverte de la couche de colle et l'autre d'un revêtement anti-adhérence, caractérisée en ce qu'elle est constituée d'une couche interne (1) faite d'un polymère ou d'un copolymère d'une α-oléfine ayant de 2 à 6 atomes de carbone, dans laquelle se trouvent des particules solides, finement dispersées, de préférence inorganiques, d'une grosseur de 0,2 à 20 μm, en une quantité de 3 à 20 % en poids, avantageusement de 5 à 15 % en poids par rapport au poids total du polymère formant la couche, en ce qu'à l'intérieur de la couche interne, à l'interface entre le milieu inorganique et la masse de polymère se trouvent des microfissures et de minuscules pores, dits vacuoles, et en ce que la couche interne porte sur les deux faces des couches de recouvrement (2, 3) faites de polymères ou de copolymères d'α-oléfines ayant de 2 à 4 atomes de carbone, dont l'une d'elles sur la face opposée à la couche interne est enduite avec une couche de colle (4) et l'autre également sur sa face opposée à la couche interne porte une couche anti-adhérence (5).

2. Bande selon la revendication 1, caractérisée en ce que la couche interne est faite d'un polymère ou d'un copolymère d'une α-oléfine ayant de 2 à 4 atomes de carbone, de préférence d'un homopolymère ou copolymère de propylène, en particulier d'un homopolymère de propylène avec une proportion isotactique d'au moins 90 %.

3. Bande selon l'une des revendications 1 et 2, caractérisée en ce que les couches de recouvrement (2, 3) ont la même structure et sont constituées d'homo- ou de copolymère de propylène et d'éthylène, qui contient éventuellement une addition de 0,1 à 1 % en poids, par rapport au poids total du polymère formant la couche, d'un pigment pour améliorer les propriétés de glissement.

4. Bande selon l'une quelconque des revendications 1 à 3, caractérisée en ce que la couche de colle (4) consiste en une colle au caoutchouc ou en une colle acrylique, et en ce que la bande possède une résistance au déroulement de plus de 5 N/25 mm de largeur de bande.

5. Bande selon l'une quelconque des revendications 1 à 4, caractérisée en ce que la couche anti-adhérence (5) est constituée d'un mélange de polyuréthanne et d'alcool polyvinylique, ou d'esters d'acides gras supérieurs.

6. Bande selon l'une quelconque des revendications 1 à 5, caractérisée en ce qu'elle a une épaisseur totale de 15 à 60 μm, en particulier de 20 à 50 μm.

7. Procédé pour la préparation d'une bande adhésive de sécurité en plusieurs couches selon l'une quelconque des revendications 1 à 6, dans lequel le polymère fondu, formant la couche interne (1) comprenant des particules finement divisées d'une part et les polymères, fondus, formant les couches de recouvrement (2, 3) d'autre part, sont extrudés ensemble et simultanément à travers une filière plate, la feuille obtenue est refroidie jusqu'à solidification, orientée par étirage dans les directions longitudinale et transversale et thermofixée, puis la couche anti-adhérence (5) et la couche de colle (4) sont appliquées selon des procédés connus, lequel procédé est caractérisé en ce que la température pendant l'étirage longitudinal atteint jusqu'à 20 °C en dessous de la température à laquelle on étire normalement en direction longitudinale une feuille limpide constituée du même matériau que la couche interne (1).

8. Procédé selon la revendication 7, caractérisé en ce que la température pendant l'étirage longitudinal est comprise entre 120 et 130 °C.

FIG.1

FIG.2